# EUROPEAN PATENT APPLICATION

(11) **EP 2 226 228 A1**
(43) Date of publication of application: **08.09.2010**
(21) Application number: 08864395.2
(22) Date of filing: 10.12.2008
(51) Int. Cl.: B60W 10/08, B60K 6/442, B60K 6/52, B60K 6/547, B60W 10/02, B60W 10/06, B60W 10/10, B60W 20/00, F02D 29/00, F02D 29/02, F16H 61/04, F16H 63/40, F16H 61/684

(54) **HYBRID SYSTEM CONTROL METHOD**

(30) Priority: 20.12.2007 JP 2007328683
(71) Applicant: Bosch Corporation, Shibuya-ku Tokyo 150-8360 (JP)
(72) Inventor: IMASEKI, Takashi, Yokohama-shi Kanagawa 224-8501 (JP)
(74) Representative: Knapp, Thomas
(86) International application number: PCT/JP2008/072375
(87) International publication number: WO 2009/081729

(57) **Abstract**

To reduce a torque drop caused by shift shock and time lag in a hybrid system.

In a hybrid system control method of the present invention, when the gear ratio of a transmission is upshifted, the torque of a motor is instantaneously increased when half clutch control of a clutch is started, and during half clutch control, the torque of the motor is controlled to be zero or minus to compensate for an increase in a vehicle drive torque resulting from rotational inertia of an engine. The torque of the motor is increased when the clutch is completely engaged and, after this increase of the torque, is attenuated by a predetermined time constant. When the gear ratio of the transmission is downshifted, the torque of the motor is increased when half clutch control of the clutch is started, and during half clutch control, the torque of the motor is attenuated by a predetermined time constant from the torque that was increased to compensate for a drop in the vehicle drive torque resulting from rotational inertia of the engine and is smoothly connected to a torque up amount at the time of complete engagement of the clutch.

## Description

### TECHNICAL FIELD

The present invention relates to a hybrid system control method for reducing a torque drop caused by shift shock and time lag occurring at a time when a transmission is shifted in an axle-split hybrid system, for example.

### BACKGROUND ART

In JP-A-2004-034816, there is disclosed a method where a transmission is placed between an engine and drive wheels, a motor is placed on one shaft of this transmission, and a drop in the drive force of the vehicle resulting from engine torque fluctuation occurring at a time when the transmission is switched or the like is prevented by torque correction resulting from the motor. Specifically, an engine output shaft torque is detected, the drive force fluctuation portion of the vehicle is calculated, and this drive force fluctuation portion of the vehicle is corrected by torque correcting means resulting from the motor. That is, in order to avoid a state where the engine output torque is not transmitted, which temporarily arises when switching gears at the time of shifting, torque compensation resulting from the motor is executed in this time slot.

However, in this conventional example, there is taken a method whose object is suppressing fluctuation in the engine output torque and which detects fluctuation in the engine output torque and applies the motor torque to suppress this fluctuation, and there has been the problem that the method does not suppress fluctuation in the vehicle drive torque. For example, as for transmission output shaft torque fluctuation or the like resulting from changes or the like in inertia at the time of shifting, there is no effect even when engine output torque fluctuation is detected and corrected with the motor torque.

Specifically, when realizing rapid shifting as in the case of an AT automatic transmission or the like, when downshifting, for example, vehicle torque lower side fluctuation resulting from engine rotation inertia occurring at a time when a shift gear clutch has shifted from a higher speed gear to a lower speed gear cannot be suppressed. Further, when upshifting, there is the problem that torque lower side fluctuation occurring immediately after engagement of the higher speed clutch has ended cannot be suppressed.

Usually, in a vehicle having an automatic transmission such as described above, not only shift shock but also time lag becomes a problem when performing shifting of the transmission. In an automatic transmission (AT), in order to reduce shift shock and time lag when shifting gears, for example, an attempt to use general coordination with the engine and half clutch control to adjust shift shock and time lag to a level at which it is difficult for the driver to notice them has been made, but this has not lead to a sufficient solution. Further, in an automatic manual transmission (AMT), basically a torque drop caused by a large time lag at the time of upshifting has been unable to be avoided.
Patent Document 1: JP-A-2004-034816

### DISCLOSURE OF THE INVENTION

### PROBLEM THAT THE INVENTION IS TO SOLVE

The present invention has been made in view of the above-described circumstances, and it is an object thereof to provide a hybrid system control method that enables a torque drop caused by shift shock and time lag to be reduced even at a time when an automatic transmission is shifted and in an automatic transmission where there are a mechanically large shift shock and time lag.

### MEANS FOR SOLVING THE PROBLEM

In order to solve the above-described problem, in a hybrid system control method for a vehicle, the hybrid system comprises an internal combustion engine for driving the vehicle, shift means for shifting and outputting the rotational speed of the internal combustion engine in any of multiple gear ratios, the shift means having clutch means that executes an engagement operation for switching the gear ratio, and electric drive means for electrically driving the vehicle, and the control method comprises: a clutch engagement step of controlling the clutch means to engage the clutch means in a half clutch state and thereafter completely engage the clutch means when the gear ratio of the shift means is switched; a first electric drive torque control step of controlling the electric drive means to output a torque for compensating for a drop in a vehicle drive torque when engagement of the clutch means into the half clutch state is started; and a second electric drive torque control step of controlling the electric drive means to output a torque for compensating for an increase or a drop in the vehicle drive torque resulting from rotational inertia of the engine while engagement of the clutch means in the half clutch state is being controlled.

According to the present invention, when engagement of the clutch means into the half clutch state is started, a torque for compensating for a drop in the vehicle drive torque is outputted, and next, while engagement of the clutch means in the half clutch state is being controlled, a torque for compensating for an increase or a drop in the vehicle drive torque resulting from rotational inertia of the engine is outputted; thus, not only can a torque drop when switching the clutch be prevented, but fluctuations in the vehicle drive torque resulting from rotational inertia of the engine can be prevented and sudden fluctuations in the vehicle G can be prevented.

In a preferred aspect, at a time of upshifting where the gear ratio is switched to a higher speed, the first electric drive torque control step has a sub-step of increasing the torque of the electric drive means to compensate for a drop in the vehicle drive torque, and the second electric drive torque control step has a sub-step of controlling the torque of the electric drive means to be equal to or less than a predetermined value to compensate for an increase in the vehicle drive torque resulting from rotational inertia of the engine.

For example, the first electric drive torque control step performs control to increase the torque of the electric drive means by a predetermined magnitude across a predetermined amount of time. For example, the second electric drive torque control step controls the torque of the electric drive means to be zero or minus.

More preferably, the method further comprises a third electric drive torque control step of increasing the torque of the electric drive means when the clutch means is completely engaged and, after this increase of the torque, attenuating the torque of the electric drive means by a predetermined time constant.

Preferably, the method further comprises, at the time of upshifting, an engine output reduction step of controlling the output of the engine to reduce the output of the engine when engagement of the clutch means in the half clutch state is being controlled.

In a preferred aspect, at a time of downshifting when the gear ratio is switched to a lower speed, the first electric drive torque control step has a sub-step of increasing the torque of the electric drive means to compensate for a drop in the vehicle drive torque. Further, the second electric drive torque control step controls the torque of the electric drive means to attenuate the torque of the electric drive means by a predetermined time constant from the torque that was increased in the first electric drive torque control step to compensate for a drop in the vehicle drive torque resulting from rotational inertia of the engine. More preferably, in the second electric drive torque control step, the torque of the electric drive means is attenuated so as to be smoothly connected to a torque up amount that occurs when the clutch means has become completely engaged.

Preferably, the method further comprises, at the time of downshifting, an engine output increase step of controlling the output of the engine to increase the output of the engine when engagement of the clutch means in the half clutch state is being controlled.

### BRIEF DESCRIPTION OF THE DRAWINGS

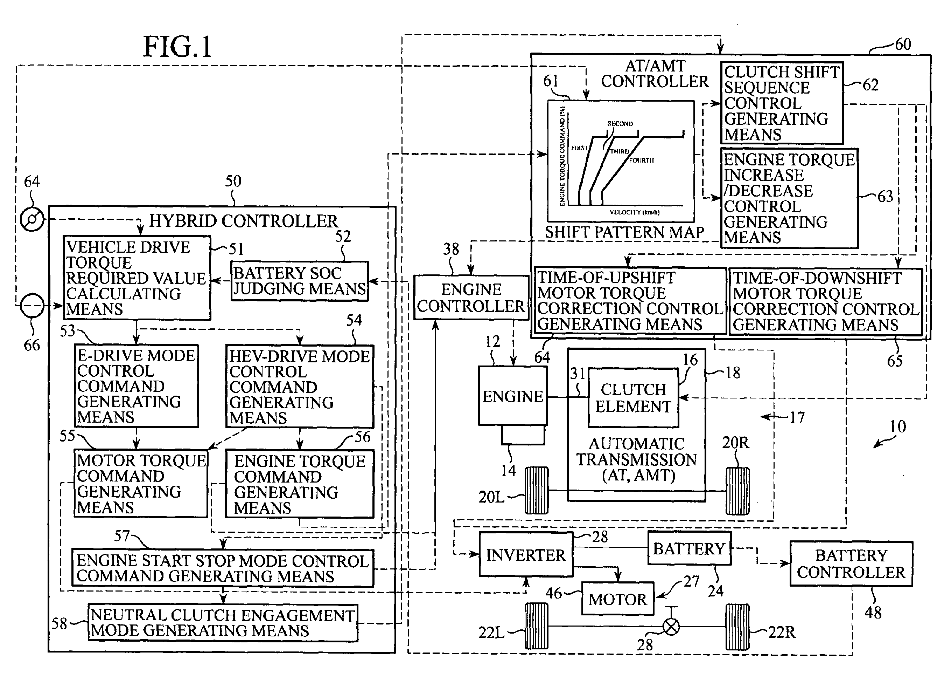

[FIG. 1] FIG. 1 is a block diagram showing a hybrid system control method pertaining to an embodiment of the present invention and a general diagram of a vehicle to which the hybrid system control method is applied;

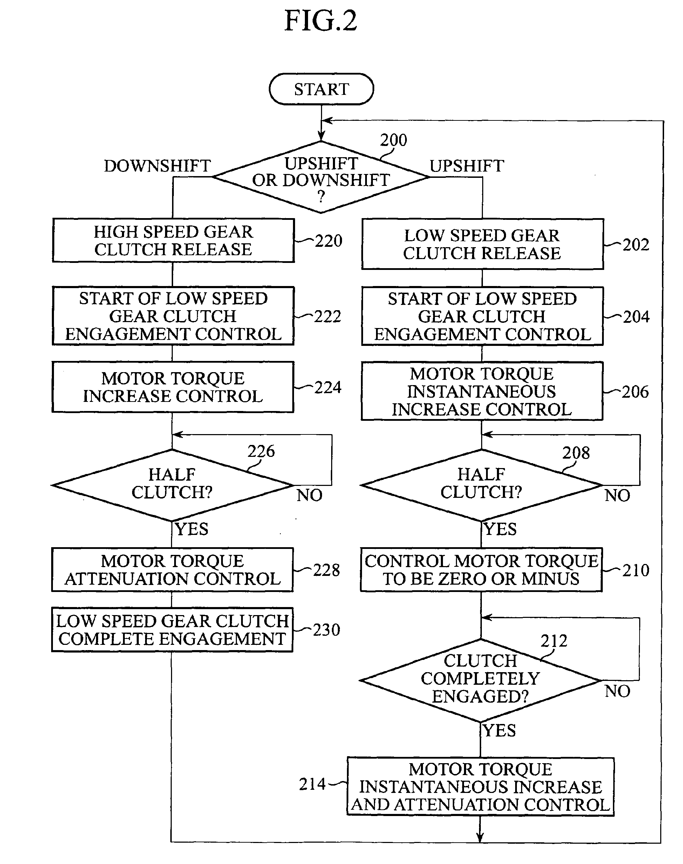

[FIG. 2] FIG. 2 is a main flowchart showing the flow of the hybrid system control method pertaining to the embodiment of the present invention;

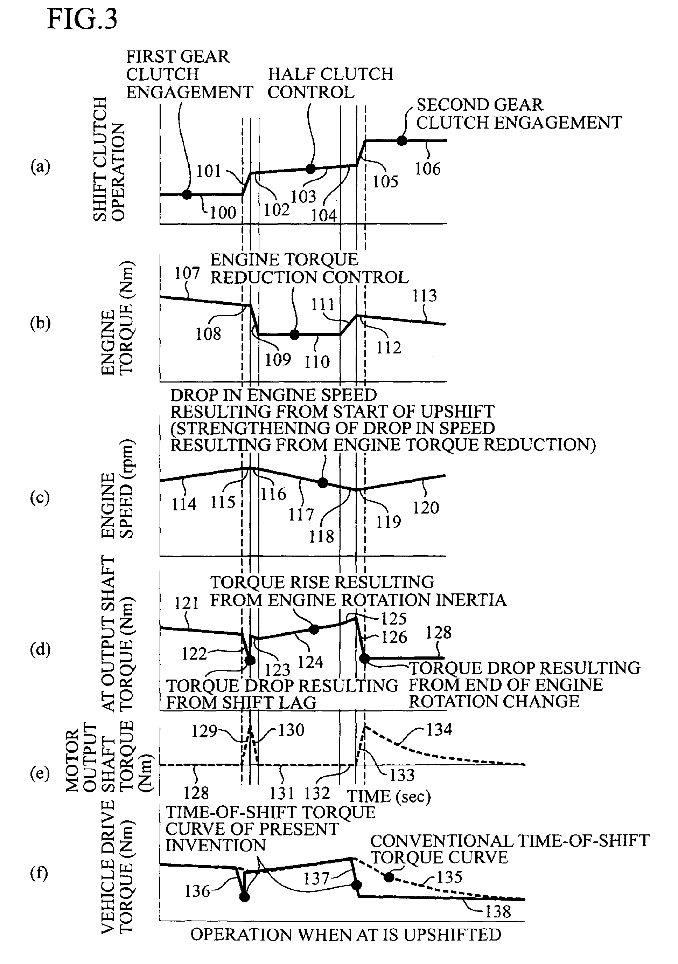

[FIG. 3] FIG. 3 is a diagram for describing operation at a time when a transmission is upshifted, with FIG. 3 (a) showing shift clutch operation, FIG. 3(b) showing engine torque control operation, FIG. 3(c) showing engine speed change, FIG. 3(d) showing AT output shaft torque change, FIG. 3(e) showing motor output shaft torque change, and FIG. 3(f) showing vehicle drive torque change; and

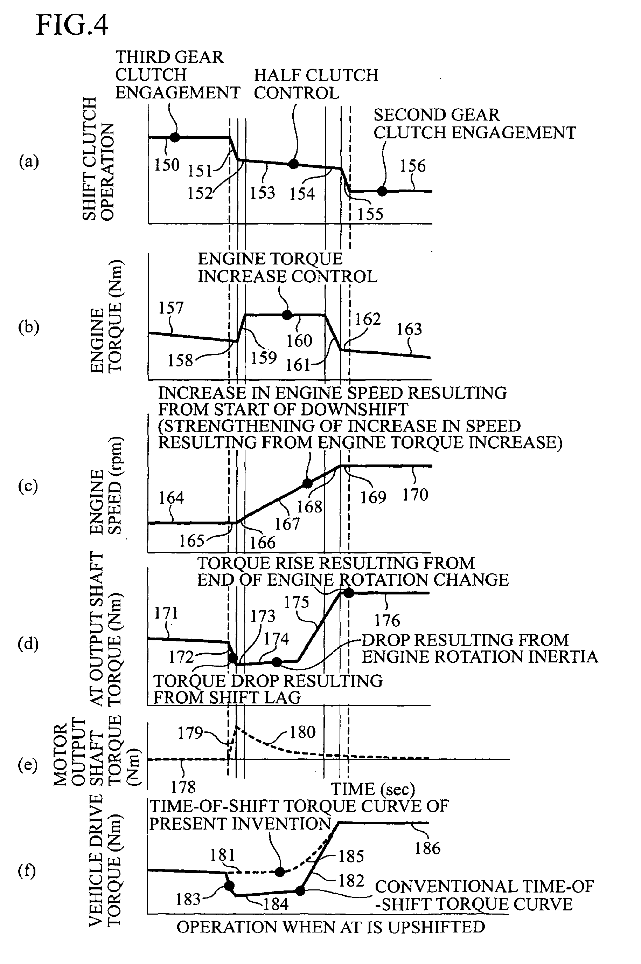

[FIG. 4] FIG. 4 is a diagram for describing operation at a time when the transmission is downshifted, with FIG. 4(a) showing shift clutch operation, FIG. 4(b) showing engine torque control operation, FIG. 4(c) showing engine speed change, FIG. 4(d) showing AT output shaft torque change, FIG. 4(e) showing motor output shaft torque change, and FIG. 4(f) showing vehicle drive torque change.

### EXPLANATION OF THE REFERENCE NUMERALS

- 10: Hybrid Vehicle
- 12: Internal Combustion Engine
- 14: Starter Motor
- 16: Clutch Element
- 17: First Drive System
- 18: Automatic Transmission (AT, AMT)
- 20L,: 20R Front Wheels
- 22L, 22R: Rear Wheels
- 24: Battery
- 26: Main Motor
- 27: Second Drive System
- 28: Differential Gear
- 31: AT Input Shaft
- 38: Engine Controller
- 46: Inverter
- 48: Battery Controller
- 50: Hybrid Controller
- 51: Vehicle Drive Torque Required Value Calculating Means
- 52: Battery SOC Judging Means
- 53: Electric Travel (E-drive) Mode Control Command Generating Means
- 54: Hybrid Travel (HEV-drive) Mode Control Command Generating Means
- 55: Motor Torque Command Generating Means
- 56: Engine Torque Command Generating Means
- 57: Engine Start Stop Mode Control Command Generating Means
- 58: Clutch Engagement Mode and AT Shift Mode Control Command Generating Means
- 60: AT/AMT Controller
- 61: Shift Pattern Map
- 63: Clutch Shift Sequence Control Generating Means
- 64: Time-of-Upshift Motor Torque Correction Control Generating Means
- 65: Time-of-Downshift Motor Torque Correction Control Generating Means
- 64: Accelerator Pedal Position Sensor
- 66: Vehicle Velocity Sensor

### EMBODIMENTS

Embodiments of the present invention will be described below with reference to the drawings.

In FIG. 1, there are shown a vehicle 10 to which a hybrid system control method pertaining to a first embodiment of the present invention is applied and a control system of the vehicle 10 that enables control of the hybrid system. The vehicle 10 is a four-wheel drive hybrid vehicle where an electric drive axle unit is placed on a driven wheel axle of an existing two-wheel drive vehicle so as to be configured with minimum vehicle alteration, and the vehicle 10 is equipped with an internal combustion engine 12, a starter motor 14 for starting up the engine 12, a first drive system 17 for transmitting the drive force of the internal combustion engine to an axle of front wheels 20L and 20R, a battery 24, and a second drive system 27 for supplying electric drive power to an axle of rear wheels 22L and 22R.

The first drive system 17 is equipped with an automatic transmission 18 that is an automatic transmission (AT) or an automatic manual transmission (AMT), and the transmission 18 has a clutch element 16 for switching the engine output to any of a low speed (e.g. , first gear) or high speed (e.g. , second gear) gear ratio or to a neutral state. An output shaft of the engine 12 is connected to an input shaft 31 of the transmission 18, and the input shaft 31 is connected to an input side of the clutch element 16. Further, an output shaft (AT output shaft) of the transmission 18 is linked to the axle of the front wheels 20R and 20L. Thus, when the clutch element 16 has been switched to a lower speed, the output of the engine 12 is transmitted to the axle of the front wheels 20L and 20R in a lower speed gear ratio, and when the clutch element 16 is switched to a higher speed, the output of the engine 12 is transmitted to the axle of the front wheels 20L and 20R in a higher speed gear ratio. When the clutch element 16 has been switched to the neutral state, the output of the engine 12 is not transmitted to the axle of the front wheels.

The second drive system 27 is equipped with a main motor 26 to which electric power is supplied by the battery 24 and a differential gear 28 that is disposed on the axle of the rear wheels. Electric drive power from the main motor 26 is transmitted onto the rear wheel axle via the differential gear 28. The main motor 26 can generate electric drive power at the time of a regeneration sequence and can charge the battery 24.

As shown in FIG. 1, the control system of the vehicle 10 is equipped with an engine controller 38 that executes necessary control to control the engine, an AT/AMT controller 60 that controls the transmission 18 beginning with engagement and release of the clutch element 16, a battery controller 48 for controlling charge and discharge of the battery 24, an inverter 46 that controls the rotational frequency of the main motor 26, and a hybrid controller 50 that executes a hybrid control method pertaining to the first embodiment of the present invention by managing and command-controlling the aforementioned controllers and inverter. Moreover, the control system of the vehicle 10 is equipped with an accelerator pedal position sensor 64 that detects an accelerator pedal position and a vehicle velocity sensor 66 that detects a vehicle velocity.

Moreover, in FIG. 1, there is shown a functional block diagram of the hybrid controller 50. According to this functional block diagram, the hybrid controller 50 is equipped with battery SOC judging means 52 that judges a state-of-charge (SOC) of the battery 24 on the basis of a signal from the battery controller 48, vehicle drive torque required value calculating means 51 that calculates a torque required value to drive the vehicle on the basis of an accelerator pedal position signal from the accelerator pedal position sensor 64, a vehicle velocity signal from the vehicle velocity sensor 66 and SOC information from the battery SOC judging means 52, electric travel (E-drive) mode control command generating means 53 that outputs a torque command value to the main motor 26 in an electric travel (E-drive) mode on the basis of an output value from the vehicle drive torque required value calculating means 51, hybrid travel (HEV-drive) mode control command generating means 54 that generates a torque command value to the engine 12 and the main motor 26 in a hybrid travel (HEV-drive) mode on the basis of the output value from the vehicle drive torque required value calculating means 51, motor torque command generating means 55 that generates a torque command signal to the inverter 46 to realize a torque command value to the motor 26 from at least either of the electric travel mode control command generating means 53 and the hybrid travel mode control command generating means 54, engine torque command generating means 56 that generates a torque command signal to the engine controller 38 to realize a torque command value to the engine 12 from the hybrid travel mode control command generating means 54, engine start stop mode control command generating means 57 that command-controls the engine controller 38 to command the engine to start up and stop on the basis of the engine torque command value from the hybrid travel (HEV-drive) mode control command generating means 54, and clutch engagement mode and AT shift mode control command generating means 58 that command-controls the AT/AMT controller 60 to control engagement and release of the clutch element 16 and a shift mode of the transmission 18 on the basis of information from the engine start stop mode control command generating means 57.

The AT/AMT controller 60 is equipped with a memory in which is stored a shift pattern map 61 for deciding the gear ratio on the basis of the vehicle velocity and the engine torque command that has been generated by the engine torque command generating means 56, clutch shift sequence control generating means 62 that generates a shift sequence for controlling the clutch element 16 on the basis of the shift pattern map 61 and shifting and switching the transmission 18, engine torque increase/decrease control generating means 63 for increasing/decreasing the engine torque in accordance with the gear ratio that has been decided on the basis of the shift pattern map 61, time-of-upshift motor torque correction control generating means 64 that generates a torque correction command to the inverter 46 to determine a time of upshifting on the basis of the shift sequence that has been generated by the clutch shift sequence control generating means 62 and correct the motor torque, and time-of-downshift motor torque correction control generating means 65 that generates a torque correction command to the inverter 46 to determine a time of downshifting on the basis of the shift sequence that has been generated by the clutch shift sequence control generating means 62 and correct the motor torque.

Next, clutch engagement control when upshifting the gear ratio of the transmission 18 (shifting the gear ratio from a lower speed to a higher speed) will be described using FIG. 3.

Clutch engagement control at the time of upshifting is executed as shown in FIG. 3(a). In FIG. 3(a), there is shown an example where, for example, the clutch element 16 is controlled from a state where it is engaged in first gear to a state where it is engaged in second gear. In the case of this control, first, the clutch element 16 is maintained in the first gear engaged state (section 100). At the time of upshifting, the clutch pressure is sharply raised for clutch engagement in second gear (section 101) such that the clutch element 16 is placed in a half clutch state (section 102), and thereafter the half clutch state is gradually strengthened in the engagement direction (section 103). Engagement is strengthened sharply (section 105) at the stage where a predetermined amount of time has elapsed in this half clutch control (section 104), and then the clutch is completely engaged in second gear (section 106). The shock of engagement can be alleviated by intervening half clutch control in this manner.

In accompaniment with the shift clutch operation of FIG. 3(a), the engine torque is controlled as shown in FIG. 3(b). That is, during first gear clutch engagement (section 100 in FIG. 3(a)), the engine torque is extremely gradually decreased (section 107) until section 108 when half clutch control is started. When a half clutch state is reached (section 102 in FIG. 3(a)), the engine torque is sharply reduced (section 109), and during the half clutch state, the engine torque is controlled to be a constant engine torque (section 110). In the section of 104 in FIG. 3(a) where half clutch control ends, the engine torque is increased (section 111). When second gear clutch engagement has been started (section 105), the engine torque is controlled to become an engine torque appropriate to second gear (section 112), and thereafter, together with the increase in speed, the engine torque is extremely gradually decreased (section 113).

In accordance with the shift clutch operation of FIG. 3(a) and the engine torque reduction control of FIG. 3(b), the engine speed changes as shown in FIG. 3(c). During first gear clutch engagement (section 100), the engine speed gradually increases (section 114), this increase tendency continues (section 115) until half clutch control is started, and when half clutch control is started, the engine speed starts to decrease (section 116), and during half clutch control (sections 103 and 104), the engine speed decrease tendency continues (sections 117 and 118). This engine speed decrease tendency in section 117 is not only something that results from upshifting but is further strengthened by the engine torque reduction control of FIG. 3(b). When second gear clutch engagement is started (section 105), the engine speed turns to a rising tendency (section 119). Thereafter, the engine speed gradually rises during the second gear clutch engaged state (section 120).

In accordance with the shift clutch operation of FIG. 3(a) and the engine torque reduction control of FIG. 3(b), the torque (AT output shaft torque) of the output shaft of the transmission 18 changes as shown in FIG. 3(d). That is, in response to the engine torque being gradually decreased during the first gear clutch engaged state, the AT output shaft torque also extremely gradually decreases (section 121). Next, at the shift stage where the first gear clutch is released and half clutch control of the second gear clutch is started (section 101 in FIG. 3(a)), the transmission path of the engine torque instantaneously breaks off because of shift lag, so the AT output shaft torque sharply falls (section 122). When the second gear clutch becomes a half clutch immediately thereafter, the AT output shaft torque sharply increases and thereafter falls somewhat (section 123). While the engine torque reduction control is being executed (section 110 in FIG. 3(b)), the AT output shaft torque is affected by engine rotation inertia so that the torque conversely rises (section 124), and while the engine torque turns to rising (section 111 in FIG. 3(b)), the AT output shaft torque rises further (section 125). Next, when second gear clutch engagement control is started (section 105) and engine rotation change ends, the AT output shaft torque sharply decreases (section 126) and thereafter extremely gradually decreases (section 128).

In contrast to the control of FIG. 3, clutch engagement control when downshifting the gear ratio of the transmission 18 (shifting the gear ratio from a higher speed to a lower speed) will be described using FIG. 4.

Clutch engagement control at the time of downshifting is executed as shown in FIG. 4(a). In FIG. 4(a), there is shown an example where, for example, the clutch element 16 is controlled from a state where it is engaged in third gear to a state where it is engaged in second gear. In the case of this control, first, the clutch element 16 is maintained in the third gear engaged state (section 150). At the time of downshifting, the clutch pressure is sharply raised for clutch engagement in second gear (section 151) such that the clutch element 16 is placed in a half clutch state (section 152), and thereafter the half clutch state is gradually strengthened to an engaged state (section 153). Second clutch engagement is strengthened sharply (section 155) at the stage where a predetermined amount of time has elapsed in this half clutch control (section 154), and then the clutch is completely engaged in second gear (section 156). The shock of engagement can be alleviated by intervening half clutch control in this manner.

In accompaniment with the shift clutch operation of FIG. 4(a), the engine torque is controlled as shown in FIG. 4(b). That is, during third gear clutch engagement (section 150 in FIG. 4(a)), the engine torque is extremely gradually decreased (section 157) until section 158 when half clutch control is started. When a half clutch state is reached (section 152 in FIG. 4(a)), the engine torque is sharply increased (section 159), and during the half clutch state, the engine torque is controlled to be a constant engine torque (section 160). In the section of 154 in FIG. 4(a) where half clutch control ends, the engine torque is decreased (section 161). When second gear clutch engagement has been started (section 155), the engine torque is controlled to become an engine torque appropriate to second gear (section 162), and thereafter, together with the increase in speed, the engine torque is extremely gradually decreased (section 163).

In accordance with the shift clutch operation of FIG. 4(a) and the engine torque increase control of FIG. 4(b), the engine speed changes as shown in FIG. 4(c). During third gear clutch engagement (section 150), the engine speed gradually increases (section 164), this increase tendency continues (section 165) until half clutch control is started, and when half clutch control is started, the engine speed starts to increase (section 166), and during half clutch control (sections 153 and 154), the engine speed increase tendency continues (sections 167 and 168). This engine speed increase tendency in section 167 is not only something that results from downshifting but is further strengthened by the engine torque increase control of FIG. 4(b). When second gear clutch engagement is started (section 155), the engine speed increase is ended (section 169). Thereafter, the engine speed is maintained at a substantial constant during the second gear clutch engaged state (section 170).

In accordance with the shift clutch operation of FIG. 4(a) and the engine torque increase control of FIG. 4(b), the torque (AT output shaft torque) of the output shaft of the transmission 18 changes as shown in FIG. 4(d). That is, in response to the engine torque being gradually decreased during the third gear clutch engaged state, the AT output shaft torque also extremely gradually decreases (section 171). Next, at the shift stage where the third gear clutch is released and half clutch control of the second gear clutch is started (section 151 in FIG. 4(a)), the transmission path of the engine torque instantaneously breaks off because of shift lag, so the AT output shaft torque sharply falls (section 172). When the second gear clutch becomes a half clutch immediately thereafter, the AT output shaft torque turns to a somewhat increasing tendency (section 173), but it is affected by engine rotational inertia and remains in a torque-downed state (section 174). After a set time period after engine torque increase control is executed, the AT output shaft torque starts to rise sharply because of the end of engine rotation change (section 175). Next, when second gear clutch engagement control is started (section 155), the AT output shaft torque maintains a substantially constant value (section 176).

A flow of processing based on a control method for reducing transmission shift shock and time lag in the axle-split hybrid system pertaining to the first embodiment described above will be described in accordance with the flowchart of FIG. 2 while referring to FIG. 3 and FIG. 4.

As shown in FIG. 2, after the vehicle 10 has started up or while the vehicle 10 is traveling, it is determined whether the gear ratio of the transmission 18 has been upshifted or downshifted (step 200). When it has been determined that the gear ratio has been upshifted, in the transmission 18, the clutch in the lower speed gear is released (step 202) and control for engaging the clutch in a higher speed gear is started (step 204). In step 204, as was described above with reference to FIG. 3(a), half clutch control is performed toward the higher speed gear. When half clutch control is started (section 101 in FIG. 3(a)), the AT output shaft torque sharply reduces because of shift lag (section 122 in FIG. 3(d)). Thus, in the embodiment of the present invention, control that instantaneously increases the output shaft torque of the motor 26 (FIG. 1) by an amount that has been determined beforehand is performed (step 206). Next, it is determined whether or not the clutch toward the higher speed gear has become a half clutch (step 208). When the clutch is not yet a half clutch (NO determination in step 208), processing stands by as is, and when the clutch has become a half clutch (YES determination in step 208), the motor torque is reduced to zero or minus (step 210).

The torque increase control from step 206 to step 210 is executed as shown in FIG. 3(e). That is, during first gear clutch engagement (section 100 in FIG. 3(a)), the motor output shaft torque is maintained at a constant value (section 128). At the time of upshifting, the motor output shaft torque is instantaneously increased (section 129 in FIG. 3(e)) to compensate for a torque down (section 122 in FIG. 3(d)) resulting from shift lag occurring in accompaniment therewith. When a half clutch state is reached (section 102 in FIG. 3(a)) and the AT output shaft torque has risen (section 123 in FIG. 3(d)), the motor torque is reduced to zero or minus (section 130 in FIG. 3(e)). Consequently, as for the drive torque for actually driving the vehicle, as shown in FIG. 3(f), whereas in the conventional time-of-shift torque curve (solid line 138), a torque down 136 resulting from shift lag occurs, in the time-of-shift torque curve (dotted line 135) resulting from the embodiment of the present invention, such a torque drop can be reduced by motor torque instantaneous increase control.

Referring again to FIG. 2, the control of the motor torque in step 210 to zero or minus is continued until the higher speed clutch is completely engaged (NO determination in step 212). That is, as shown in section 131 in FIG. 3(e), the motor output shaft torque is controlled across a certain amount of time to maintain its zero or minus value. In this section, a torque up (section 124 in FIG. 3(d)) resulting from engine speed engine rotation inertia occurs, but the motor acts as a rotational load because of the control of step 210, so as for the drive torque for actually driving the vehicle, as shown in FIG. 3(f), fluctuation toward the torque increase side of the vehicle is suppressed in the section corresponding to section 131 shown in FIG. 3(e).

Next, when the half clutch of the higher speed gear clutch ends and the higher speed gear clutch has been completely engaged (YES determination in step 212), the motor torque is instantaneously increased by an amount that has been set beforehand (section 133 in FIG. 3(e)), and the motor torque is thereafter controlled so as to be attenuated by a time constant that has been determined beforehand (section 134 in FIG. 3(e)) (step 214).

When complete engagement of the higher speed clutch is started, a torque down (section 126 in FIG. 3(d)) resulting from the end of engine speed change occurs as shown in FIG. 3(d). The conventional time-of-shift torque curve in which step 214 is not executed could not be smoothly connected to torque 138 occurring after the torque down with the large inclination represented by 137 occurs in the vehicle drive torque as shown in FIG. 3(f) and the high speed gear clutch has been completely engaged. However, according to the control pertaining to the embodiment of the present invention, the torque down is reduced by the motor torque instantaneous increase control as represented by dotted line 135 in FIG. 3(f) and can be smoothly connected by attenuation control thereafter to the torque occurring after the higher speed gear clutch has become completely engaged.

Usually the driver is sensitive to sudden fluctuations in the vehicle G, so a smooth torque change can be achieved even at the time of shifting by the torque down reduction control described above and the driver can enjoy comfortable travel.

When it has been determined in step 200 that the gear ratio of the transmission 18 has been downshifted, in the transmission 18, the clutch in the higher speed gear is released (step 220) and control for engaging the clutch in a lower speed gear is started (step 222). In step 222, as was described above with reference to FIG. 4(a), half clutch control is performed toward the lower speed gear. When half clutch control is started (section 151 in FIG. 4(a)), the AT output shaft torque sharply reduces because of shift lag (section 172 in FIG. 4(d)). Thus, in the embodiment of the present invention, control that increases the output shaft torque of the motor 26 (FIG. 1) by an amount that has been determined beforehand is performed (step 224). The torque increase control of step 224 is executed as shown in FIG. 4(e). That is, during third gear clutch engagement (section 150 in FIG. 4(a)), the motor output shaft torque is maintained at a constant value (section 178). At the time of downshifting, the motor output shaft torque is sharply increased (section 179 in FIG. 4(e)) to compensate for a torque down (section 172 in FIG. 4(d)) resulting from shift lag occurring in accompaniment therewith. Consequently, as for the drive torque for actually driving the vehicle, as shown in FIG. 4(f), whereas in the conventional time-of-shift torque curve (solid line 182), a torque down 183 resulting from shift lag occurs, in the time-of-shift torque curve (dotted line 181) resulting from the embodiment of the present invention, such a torque drop can be reduced by motor torque instantaneous increase control.

Next, it is determined whether or not the clutch toward the lower speed gear has become a half clutch (step 226). When the clutch is not yet a half clutch (NO determination in step 226), processing stands by as is, and when the clutch has become a half clutch (YES determination in step 226), as represented by dotted line 180 in FIG. 4(e), the motor torque is attenuated by a time constant that has been determined beforehand (step 228). Finally, the clutch in the lower speed gear is completely engaged (step 230).

As shown in FIG. 4(d), during control that places the clutch toward the lower speed gear in a half clutch (section 153 in FIG. 4(a)), a torque down resulting from engine rotation inertia (section 174 in FIG. 4(d)) and next a torque up resulting from the end of engine rotation change (section 175 in FIG. 4(d)) occur. Thus, in the conventional time-of-shift torque curve, as represented by solid line 182 in FIG. 4(f), a state where the vehicle drive torque has dropped after sharply dropping in section 183 continues for a certain time period (section 184), and thereafter the vehicle drive torque sharply rises (section 185) and leads to the torque at the time of clutch engagement (section 186). However, in the embodiment of the present invention, like in step 228, the motor torque is attenuated by a predetermined time constant from its increased value in step 224, so as represented by dotted line 181 in FIG. 4(f), the vehicle drive torque is smoothly connected without there being a torque drop to a torque up amount (section 186) occurring when the clutch in the lower speed gear has become completely engaged. Consequently, according to the present invention, even at the time of downshifting, sudden fluctuations in the vehicle G that the driver sensitively feels can be suppressed.

Embodiments of the present invention have been described above, but the present invention is not limited only to the above-described examples and is arbitrarily suitably alterable in the scope of the present invention defined by the claims. For example, in the configuration of FIG. 1, the first drive system 17 driven by the engine is disposed on the front wheel side and the second drive system 27 having the main motor 26 is disposed on the rear wheel side, but the second drive system 27 having the main motor 26 may also be disposed on the front wheel side and the first drive system 17 driven by the engine may also be disposed on the rear wheel side.

Further, in FIG. 3, there is shown an example where the transmission 18 is upshifted from first gear to second gear, and in FIG. 4, there is shown an example where the transmission 18 is downshifted from third gear to second gear, but "upshifting" in the present invention encompasses shifting from an arbitrary speed ratio to a speed ratio that is one position or more higher than that speed ratio, and "downshifting" in the present invention encompasses shifting from an arbitrary speed ratio to a speed ratio that is one position or more lower than that speed ratio.

## Claims

1. A control method of a hybrid system for a vehicle,
the hybrid system comprising
an internal combustion engine for driving the vehicle, shift means for shifting and outputting the rotational speed of the internal combustion engine in any of multiple gear ratios, the shift means having clutch means that executes an engagement operation for switching the gear ratio, and
electric drive means for electrically driving the vehicle,
the control method comprising:
a clutch engagement step of controlling the clutch means to engage the clutch means in a half clutch state and thereafter completely engage the clutch means when the gear ratio of the shift means is switched;
a first electric drive torque control step of controlling the electric drive means to output a torque for compensating for a drop in a vehicle drive torque when engagement of the clutch means into the half clutch state is started; and
a second electric drive torque control step of controlling the electric drive means to output a torque for compensating for an increase or a drop in the vehicle drive torque resulting from rotational inertia of the engine while engagement of the clutch means in the half clutch state is being controlled.

2. The method according to claim 1, wherein
at a time of upshifting where the gear ratio is switched to a higher speed,
the first electric drive torque control step has a sub-step of increasing the torque of the electric drive means to compensate for a drop in the vehicle drive torque, and
the second electric drive torque control step has a sub-step of controlling the torque of the electric drive means to be equal to or less than a predetermined value to compensate for an increase in the vehicle drive torque resulting from rotational inertia of the engine.

3. The method according to claim 2, wherein the first electric drive torque control step increases the torque of the electric drive means by a predetermined magnitude across a predetermined amount of time.

4. The method according to claim 2, wherein the second electric drive torque control step controls the torque of the electric drive means to be zero or minus.

5. The method according to claim 2, further comprising a third electric drive torque control step of increasing the torque of the electric drive means when the clutch means is completely engaged and, after this increase of the torque, attenuating the torque of the electric drive means by a predetermined time constant.

6. The method according to any one of claims 2 to 5, further comprising, at the time of upshifting, an engine output reduction step of controlling the output of the engine to reduce the output of the engine when engagement of the clutch means in the half clutch state is being controlled.

7. The method according to claim 1, wherein
at a time of downshifting when the gear ratio is switched to a lower speed,
the first electric drive torque control step has a sub-step of increasing the torque of the electric drive means to compensate for a drop in the vehicle drive torque.

8. The method according to claim 7, wherein the second electric drive torque control step controls the torque of the electric drive means to attenuate the torque of the electric drive means by a predetermined time constant from the torque that was increased in the first electric drive torque control step to compensate for a drop in the vehicle drive torque resulting from rotational inertia of the engine.

9. The method according to claim 8, wherein in the second electric drive torque control step, the torque of the electric drive means is attenuated so as to be smoothly connected to a torque up amount that occurs when the clutch means has become completely engaged.

10. The method according to claim 7, further comprising, at the time of downshifting, an engine output increase step of controlling the output of the engine to increase the output of the engine when engagement of the clutch means in the half clutch state is being controlled.
